# EUROPÄISCHE PATENTSCHRIFT

(11) **EP 4 381 223 B1**
(45) Veröffentlichungstag und Bekanntmachung des Hinweises auf die Patenterteilung: **19.11.2025**
(21) Anmeldenummer: 22754450.9
(22) Anmeldetag: 02.08.2022
(51) Int. Cl.: F17C 9/04

(54) **VERFAHREN UND VORRICHTUNG ZUM WIEDERVERFLÜSSIGEN UND RÜCKFÜHREN VON BOG IN EINEN LNG-TANK**
METHOD AND DEVICE FOR RELIQUIFYING AND RETURNING BOG TO AN LNG TANK
PROCÉDÉ ET DISPOSITIF DE RELIQUÉFACTION ET DE RECIRCULATION DU BOG DANS UN TRANSPORTEUR DE GAZ NATUREL LIQUÉFIÉ

(30) Priorität: 02.08.2021 EP 21189168
(43) Veröffentlichungstag der Anmeldung: 12.06.2024
(73) Patentinhaber: Burckhardt Compression AG, 8404 Winterthur (CH)
(72) Erfinder: VALÄR, Adrian Luzi, 8408 Winterthur (CH); SCHROTH, Roman, 8708 Männedorf (CH)
(74) Vertreter: Hepp Wenger Ryffel AG
(86) Internationale Anmeldenummer: PCT/EP2022/071610
(87) Internationale Veröffentlichungsnummer: WO 2023/012132

(56) Entgegenhaltungen:
- KR-A- 20200 001 078
- KR-B1- 101 814 439
- KR-B1- 102 040 005

## Beschreibung

Die Erfindung betrifft das technische Gebiet der Wiederverflüssigung von Abdampfgas (BOG) aus einem Liquefied Natural Gas (LNG) Tank.

In letzter Zeit ist der Verbrauch von Flüssiggas wie z. B. verflüssigtem Erdgas (LNG) weltweit stark angestiegen. Flüssiggas, das durch Abkühlung von Erdgas auf eine extrem niedrige Temperatur gewonnen wird, hat ein kleines Volumen und ist damit gut geeignet für Lagerung und Transport. Darüber hinaus ist Flüssiggas wie LNG schadstoffarm und damit besser vereinbar mit regulatorischen Vorgaben als beispielsweise Schweröl.

LNG ist eine farblose und transparente Flüssigkeit, die durch Abkühlung von Erdgas, das hauptsächlich aus Methan besteht, auf etwa -163° C gewonnen wird. Da Erdgas jedoch bei einer extrem niedrigen Temperatur von -163° C. unter Normaldruck verflüssigt wird, kann LNG bei einem leichten Temperaturanstieg leicht verdampfen. In einem LNG-Lagertank wird daher kontinuierlich LNG auf natürliche Weise verdampft und dadurch Boil-Off Gas (BOG) erzeugt.

Die Entstehung von BOG bedeutet einen Verlust an gespeichertem LNG und verringert also beispielsweise auf einem LNG-Tanker die Transporteffizienz. Wenn sich BOG in einem Lagertank ansammelt, besteht ausserdem die Gefahr, dass der Druck im Lagertank ansteigt und der Tank beschädigt wird.

Zur Behebung des Problems wurde eine Methode vorgeschlagen, bei der BOG wieder verflüssigt wird, um es in einen LNG-Lagertank rückzuführen, eine Methode, bei der BOG als Energiequelle einem Verbrennungsmotor, wie z. B. einem Schiffsmotor, zugeführt wird, und Kombinationen davon. In der US2019/0351988 beispielsweise wird vorgeschlagen, BOG aus einem LNG-Tank einem DFDE-Motor, einem X-DF-Motor oder einem ME-GI Schiffsmotor zuzuführen. Gleichzeitig ist vorgesehen, BOG als Kältemittel zur Wiederverflüssigung von komprimiertem BOG in einem Teilrückverflüssungssystem (Partial Reliquefaction System, PRS) zu verwenden. KR 101 814 439 B1 offenbart ein gattungsgemäßes Rückverflüssigungssystem bzw. - verfahren.

Das genannte System weist jedoch den Nachteil auf, dass sich über die Rückverflüssigungszyklen Stickstoff im Gasgemisch anreichert. Natürliches Erdgas ist ein Gasgemisch, das hauptsächlich aus Methan besteht, aber häufig auch Anteile von Ethan, Propan, Butan und anderen Kohlenwasserstoffen aufweist. Weitere Nebenbestandteile können Schwefelwasserstoff, Stickstoff und Kohlendioxid sein. Stickstoff ist typischerweise zu ca. 1 bis 15 % in natürlichem Erdgas enthalten. Stickstoff weist einen Siedepunkt von -196°C auf, mithin deutlich tiefer als der Siedepunkt von Methan, welches bei -161°C in die gasförmige Phase übergeht. Da sich N₂ in den üblichen BOG-Rückverflüssigungssystemen also kaum rückverflüssigen lässt, erhöht sich sein Anteil im Gemisch über die Zeit. Die Qualität des Erdgases nimmt ab. Zudem wird ein beträchtlicher Teil der Kapazität der Kompressionsanordnung durch den erhöhten N₂-Anteil beansprucht und die Effizienz des Systems verringert sich zusehends.

Es ist daher die Aufgabe der vorliegenden Erfindung, die Nachteile im Stand der Technik zu überwinden. Insbesondere ist es die Aufgabe der vorliegenden Erfindung, ein Verfahren zur Teilrückverflüssigung von BOG respektive ein Teilrückverflüssigungssystem (PRS) bereitzustellen, bei dem die Anreicherung von N₂ über konsekutive Zyklen verringert oder verhindert wird.

Die Aufgabe wird durch ein Verfahren aufweisend die Merkmale von Anspruch 1, respektive eine Vorrichtung aufweisend die Merkmale von Anspruch 7, gelöst.

Insbesondere wird die Aufgabe gelöst durch ein Verfahren zum Wiederverflüssigen und Rückführen von Abdampfgas (BOG) in einen Liquefied Natural Gas (LNG)-Tank, umfassend die Schritte:
a) Entnehmen von BOG (F2) aus dem Kopfraum eines LNG Tanks;
b) Verdichten des BOG in einer ersten Kompressionsstufe auf einen ersten Druck p₁ zwischen 8 und 18 bara und Abzweigen eines ersten Teils dieses Gases;
c) Weiterverdichten eines zweiten Teils des Gases aus Schritt b) in einer letzten Kompressionsstufe auf einen zweiten Druck p₂ ≥ 120 bara, bevorzugt 120 bis 400 bara, besonders bevorzugt 150 bis 300 bara;
d) Kühlen von wenigstens einem Teil des weiterverdichteten Gases aus Schritt c) auf eine erste Temperatur T₁ zwischen -20°C und -100°C;
e) Ausdehnen des Gases aus Schritt d) auf einen dritten Druck p₃ zwischen 8 und 20 bara;
f) Auftrennen des Gases aus Schritt e) in eine flüssige Phase und eine gasförmige Phase um
   f₁) die gasförmige Phase mit dem abgezweigten ersten Teil des Gases aus Schritt c) zu kombinieren; und
   f₂) die flüssige Phase in den LNG Tank rückzuführen.

Es hat sich herausgestellt, dass durch ein solches Verfahren der Stickstoff besonders gut dem System entzogen werden und das mit Stickstoff angereicherte Gas einem nützlichen Zweck zugeführt werden kann. Im Schritt f) wird sich der Stickstoff fast vollständig in der gasförmigen Phase befinden. Wenn die gasförmige Phase mit dem in der ersten Kompressionsstufe (Schritt c) auf p₁ verdichteten BOG kombiniert wird, kann damit ein Niederdruck-Gaseinspritzmotor zuverlässig betrieben werden.

Das Verfahren weist weiter den Vorteil auf, dass generell Flash-Gas aus dem Rückverflüssigungssystem PRS entnommen wird, anstatt dieses erneut zu komprimieren. Dadurch wird die erste Kompressionsstufe gegenüber herkömmlichen Systemen entlastet. Sie kann kleiner dimensioniert und/oder effizienter betrieben werden. Insgesamt wird der Energieaufwand gesenkt.

Das Weiterverdichten eines zweiten Teils des Gases aus Schritt b) in einer letzten Kompressionsstufe auf einen zweiten Druck p₂ mit anschliessender Kühlung (Schritt d)) und isenthalper Ausdehnung (Schritt e)) dient der effizienten Rückverflüssigung des Gases, teilweise unter Nutzung des Joule-Thomson Effekts. Mit dem zweiten Druck p₂ wird ein relativ hoher Druck angestrebt, sodass nach der üblichen Wasserkühlung auf T_{w} ein hochkomprimiertes Gas bei ca. 35-45°C aufweisend eine entsprechend tiefe Enthalpie vorliegt. Durch weitere Kühlschritte und isenthalpe Ausdehnung e) des Gases lässt sich das komprimierte Gas auf die Temperatur zunächst auf T₁ mit Ausdehnung auf Druck p₃ auf noch tiefere Temperaturen bringen, in einen Zustand also, der für die Phasentrennung günstig ist.

Gemäß der Erfindung, erfolgt das Kühlen in Schritt d) zumindest teilweise durch Wärmetausch, bevorzugt indirekten Wärmetausch, mit kühlendem BOG (F2) aus dem Kopfraum des LNG Tanks Zwar kann ein Kühlschritt oder auch mehrere Kühlschritte des Verfahrens wie beschrieben auch mit Hilfe eines separaten Kühlkreislaufs mit entsprechendem Kältemittel, typischerweise N₂, ausgeführt werden. Dies ist jedoch aufwändig und energieintensiv. Im Gegensatz dazu ist Kühlmittel bei Temperaturen knapp über dem Siedepunkt von LNG als BOG im System ohnehin vorhanden.

In einer bevorzugten Ausführungsform wird in Sub-Schritt f₂) die flüssige Phase vor dem Rückführen in den LNG Tank auf eine Temperatur T₂ zwischen -140 und -161°C gekühlt. Dies reduziert eine neuerliche Bildung von BOG. Bevorzugt wird diese Kühlung durch Wärmetausch im Gegenstrom zu BOG aus dem LNG-Tank bewirkt. So wird die vorhandene Kühlkapazität optimal genutzt. Vor oder beim dem Einleiten der flüssigen Phase in den LNG-Tank wird das rückverflüssigte Gas schliesslich auf Umgebungsdruck von 1 bara entspannt.

Wenn, wie vorstehend beschrieben, sowohl in Schritt f₂) als auch in Schritt d) das Kühlen durch Wärmetausch, bevorzugt indirekten Wärmetausch, mit kühlendem BOG aus dem Kopfraum des LNG Tanks erfolgt, ist es zweckmässig, wenn das unmittelbar aus dem LNG-Tank entnommene und besonders kalte BOG zum Kühlen in Sub-Schritt f₂) verwendet wird und das BOG hernach, bei bereits leicht erhöhter Temperatur, zum Kühlen in Schritt d) verwendet wird.

In einer besonders bevorzugten Ausführungsform erfolgt das Kühlen in Schritt d) zumindest teilweise durch Wärmeaustausch mit der gasförmigen Phase aus Schritt f). Nach der Phasenauftrennung weist die gasförmige Phase einen Druck p3 und typischerweise eine Temperatur um -80°C auf. Da die gasförmige Phase für die Verwendung in einem Niederdruck-Gaseinspritzmotor vorgesehen ist, sind nicht derart tiefe Temperaturen und häufig auch nicht ein derart hoher Druck erforderlich. Die gasförmige Phase kann daher als Kältemittel in einem Kühlprozess verwendet werden. Durch eine weitere Ausdehnung der gasförmigen Phase aus Schritt f) vor der Verwendung als Kühlmittel kann die Temperatur unter Nutzung des Joule-Thomson Effekts weiter abgesenkt werden.

Es ist besonders bevorzugt, wenn die gasförmige Phase aus Schritt f) und das BOG aus dem Kopfraum des LNG-Tanks beide als Kühlmittel in Schritt d) verwendet werden, wobei aber die gasförmige Phase aus Schritt f) für das Vorkühlen des wärmeren verdichteten Gases verwendet wird, das BOG aus dem LNG-Tank dagegen für das Kühlen das bereits vorgekühlten verdichteten Gases verwendet wird. In eine solchen Anordnung wird das auf p₂ verdichtete und typischerweise bei Temperaturen von deutlich über 100°C vorliegende Gas zunächst durch Wasserkühlung auf ca. 35-45°C gekühlt, danach im Wärmetausch mit der gasförmigen Phase aus Schritt f) auf Zwischentemperaturen von ca. 25 bis -15°C gekühlt und weiter flussabwärts durch Wärmetausch mit kühlendem BOG aus dem LNG-Tank auf die Temperatur T₁ zwischen -20 und -100°C gekühlt. Durch diese Abfolge von Wärmetausch-Schritten wird die vorhandene Kühlkapazität von BOG und komprimiertem Gas im Sinne einer optimierten Nutzung der im System vorhandenen Kühlkapazität eingesetzt.

Es ist bevorzugt, wenn in Schritt d) ein Teil des weiterverdichteten Gases aus Schritt c) einer Versorgungsleitung für einen Hochdruck-Gaseinspritzmotor (2) zugeführt wird. In dieser Ausführungsform kann das hochkomprimierte Gas bei Druck p₂ dazu verwendet werden, einen Hochdruck-Gaseinspritzmotor anzutreiben, oder kann alternativ rückverflüssigt werden. Insbesondere auf einem Flüssiggastanker ist Erdgas der Brennstoff der Wahl, um die Emission von Luftschadstoffen auf ein relativ geringes Mass zu beschränken. Die Einstellbarkeit der Menge, die an den Gaseinspritzmotor respektive in das PRS geleitet wird, erlaubt es, den klimatischen und meteorologischen Bedingung wie auch dem Brennstoffbedarf des Hochdruckgaseinspritzmotors flexibel Rechnung zu tragen.

In einer bevorzugten Ausführungsform wird in Schritt f) der Druck p₃ überwacht und geregelt, sodass er einen Wert innerhalb eines vorbestimmten Bereichs aufweist. Dies kann mittels Drucksensor erreicht werden. Der Messwert erlaubt es, die Bedingungen im Gas-Flüssigkeitsabscheider zu optimieren wie auch gegebenenfalls eine LNG-Fördermenge anzupassen. Zusätzlich oder alternativ kann in Schritt f) ein Volumen der flüssigen Phase überwacht werden, um die Rückführmenge in den LNG-Tank in Abhängigkeit des Werts zu regeln.

Ein weiterer Aspekt der Erfindung bezieht sich auf eine Vorrichtung zum Wiederverflüssigen und Rückführen von Abdampfgas (BOG) in einen Liquefied Natural Gas (LNG)-Tank umfassend
- einen ersten Wärmetauscher, aufweisend eine Leitung zum Durchführen von Kühlfluid, bevorzugt BOG aus einem LNG-Tank, und eine Leitung zum Durchführen von zu kühlendem komprimiertem Gas, bevorzugt im Gegenstrom;
- einen mehrstufigen Verdichter, der wenigstens eine erste Kompressionsstufe und eine letzte Kompressionsstufe aufweist, wobei die erste Kompressionsstufe eingerichtet ist, BOG (F2) aus dem LNG-Tank auf einen ersten Druck p₁ zwischen 8 und 18 bara zu verdichten, und wobei die letzte Kompressionsstufe eingerichtet ist, vorverdichtetes BOG auf einen zweiten Druck p₂ ≥ 120, bevorzugt 120 bis 400 bara, besonders bevorzugt 150 bis 300 bara, zu verdichten;
- eine Abzweigleitung, welche Fluid leitend stromabwärts von der ersten Kompressionsstufe angeordnet ist und die weiter stromabwärts in eine Versorgungsleitung für einen Niederdruck-Gaseinspritzmotor und/oder einer Gasverbrennungseinheit mündet;
- eine Rückführleitung;
- eine erste Expansionseinheit, die eingerichtet ist, komprimiertes Gas von einem zweiten Druck p₂ auf einen dritten Druck p₃ auszudehnen, wobei p₃ zwischen 8 und 20 bara, bevorzugt zwischen 10 und 18 bara beträgt;
- einen Gas-Flüssigkeits-Abscheider der eingerichtet ist, um bei einem Druck p₃ einen verflüssigten Gasanteil für die Rückspeisung in den LNG-Tank (3) abzuscheiden und einen gasförmigen Anteil in eine Überbrückungsleitung zu führen, wobei die Überbrückungsleitung in die Abzweigleitung mündet;
wobei der mehrstufige Verdichter stromaufwärts Fluid führend mit dem Kopfraum des LNG Tanks verbunden ist, bevorzugt über die Leitung des Wärmetauschers zum Durchführen von kühlendem BOG, und wobei der mehrstufige Verdichter stromabwärts Fluid führend über die Rückführleitung mit der Leitung des ersten Wärmetauschers zum Durchführen von zu kühlendem komprimiertem Gas verbunden ist, weiter stromabwärts mit der ersten Expansionseinheit verbunden ist, und noch weiter stromabwärts mit dem Gas-Flüssigkeits-Abscheider verbunden ist; und wobei der erste Wärmetauscher insbesondere dazu eingerichtet ist, wenigstens einen Teil des auf den zweiten Druck p₂ weiterverdichteten BOG auf eine erste Temperatur T₁ zwischen -20°C und -100°C zu kühlen.

Eine solche Vorrichtung ist in der Lage ein erfindungsgemässes Verfahren auszuführen. Der im Erdgas vorhandene Stickstoff reichert sich in der Gasphase des Gas-Flüssigkeitsabscheiders an, wird dem System entzogen und als Brennstoffgemisch einem nützlichen Zweck zugeführt. Über die Überbrückungsleitung kann die gasförmige Phase mit dem in der ersten Kompressionsstufe auf p₁ verdichteten BOG kombiniert werden, wodurch die zuverlässige Versorgung des Niederdruck-Gaseinspritzmotors mit Brennstoff gewährleistet werden kann. Generell kann durch die erfindungsgemässe Vorrichtung Flash-Gas aus dem Rückverflüssigungszyklus dem System entnommen werden, anstatt dieses wiederholt zu komprimieren, was die mehrstufige Kompressionsanordnung, insbesondere die erste Kompressionsstufe, entlastet und eine kleinere Ausfertigung ermöglicht.

Die erste Kompressionsstufe kann einen oder mehrere Kolbenkompressoren umfassen, mit einer jeweils daran anschliessenden Wasserkühlung. Das gleiche gilt für jede höhere Kompressionsstufe. Es ist bevorzugt, wenn an die letzte Kompressionsstufe ebenfalls eine Wasserkühlung anschliesst. So kann hochverdichtetes LNG bei einem Druck p₂ und einer Temperatur von ca. 35-45°C bereitgestellt werden, welches sich gut für die Behandlung im Rückverflüssigungssystem PRS eignet.

Der Niederdruck-Gaseinspritzmotor, der durch die Versorgungsleitung mit Brennstoff beliefert wird, verwendet typischerweise Gas bei einem Druck von ca. 6 bis 18 bara, bevorzugt bei einem Druck von rund 6 bara. Da der Druck p₂ in der Abzweigleitung höher sein kann als dieser Soll-Druck, kann zwischen der Abzweigleitung und der Versorgungsleitung ein Drosselventil zur Entspannung des Gases vorgesehen sein.

Die Expansionseinheit kann ein Expansionsventil oder ein Expander sein. Bei der Expansion wird der Joule-Thomson Effekt genutzt um die Temperatur im rückzuverflüssigenden Gas weiter abzusenken. Da der Druck p₃ im Gas-Flüssigkeits-Abscheider höher sein kann, als der Druck p₂ in der Abzweigleitung, kann die Überbrückungsleitung ebenfalls eine Expansionseinheit aufweisen.

In einer bevorzugten Ausführungsform umfasst die vorstehend beschriebene Vorrichtung einen zweiten Wärmetauscher, aufweisend eine Leitung zum Durchführen von Kühlfluid, bevorzugt BOG aus einem LNG-Tank, und eine Leitung zum Durchführen von zu kühlendem, komprimiertem Gas, bevorzugt im Gegenstrom, wobei beim zweiten Wärmetauscher die Leitung zum Durchführen von zu kühlendem komprimiertem Gas Fluid führend zwischen dem Gas-Flüssigkeitsabscheider und dem LNG-Tank angeordnet ist, und wobei bevorzugt die Leitung zum Durchführen von Kühlfuid Fluid führend zwischen dem Kopfraum des LNG-Tanks und dem ersten Wärmetauscher angeordnet ist. Mit Hilfe des zweiten Wärmetauschers kann das besonders kalte BOG unmittelbar nach dem Entweichen für die Kühlung des rückverflüssigten Gases verwendet werden, während das bereits leicht erwärmte BOG als Kühlmittel in eine Kühlstufe flussabwärts der Wasserkühlung aber flussaufwärts des Gas-Flüssigkeits-Abscheiders eingesetzt wird. Der gezielte Einsatz des BOG als Kühlmittel in verschiedenen Abschnitten des PRS erhöht insgesamt die Rückverflüssigungsrate.

Es ist bevorzugt, wenn die Vorrichtung einen dritten Wärmetauscher umfasst, dessen kühlende Leitung Teil der Überbrückungsleitung ist und dessen zu kühlende Leitung Teil der Rückführleitung ist. Dadurch kann die im Gas-Flüssigkeits-Abscheider isolierte gasförmige Phase, die einen Druck p₃ und eine Temperatur um -82°C aufweist, zunächst als Kältemittel eingesetzt und flussabwärts als Brennstoff für einen Niederdruck-Gaseinspritzmotor verwendet werden. Es kann eine weitere Expansionseinheit zwischen dem Gas-Auslass des Gas-Flüssigkeits-Abscheiders und dem dritten Wärmetauscher angeordnet sein. Durch eine weitere Ausdehnung der gasförmigen Phase aus Schritt f) vor der Verwendung als Kühlmittel kann die Temperatur unter Nutzung des Joule-Thomson Effekts weiter abgesenkt werden.

Es ist bevorzugt, wenn die Vorrichtung weiter umfasst eine zweite Expansionseinheit, die eingerichtet ist, komprimiertes Gas von einem dritten Druck p₃ auf Atmosphärendruck auszudehnen, wobei die zweite Expansionseinheit Fluid führend zwischen dem Flüssigkeitsauslass des Gas-Flüssigkeitsabscheiders und dem LNG-Tank, bevorzugt zwischen der Leitung des zweiten Wärmetauschers zum Durchführen von zu kühlendem komprimiertem Gas und dem LNG-Tank angeordnet ist.

Nach dem Gas-Flüssigkeits-Abscheider befindet sich die flüssige Phase typischerweise bei einem Druck p₃ und einer Temperatur von etwa -110°C. Nach Abkühlung im zweiten Wärmetauscher auf rund - 155°C kann das rückverflüssigte Gas in einer weiteren Expansionseinheit nochmals expandiert werden, beispielsweise auf Atmosphärendruck, und es können besonders tiefe Temperaturen um den Siedepunkt von Erdgas erzielt werden.

Die Vorrichtung kann Teil eines Brenngasversorgungssystems zum Versorgen eines Hochdruck-Gaseinspritzmotors mit im LNG-Tank gespeicherten Gas sein, zusätzlich umfassend einen Auslass, der Fluid leitend stromabwärts von der zweiten Kompressionsstufe des mehrstufigen Verdichters angeordnet ist und weiter stromabwärts in eine Versorgungsleitung für einen Hochdruck-Gaseinspritzmotor mündet, wobei das verdichtete Gas, soweit die Menge den Brennstoffbedarf des Hochdruck-Gaseinspritzmotors übersteigt, der Rückführleitung, insbesondere aus dem Auslass, zuführbar ist.

In dieser Ausführungsform kann das hochkomprimierte Gas bei Druck p₂ entweder dazu verwendet werden, einen Hochdruck-Gaseinspritzmotor anzutreiben, oder im PRS rückverflüssigt werden. Erdgas als Transportgut kann zum Beispiel gleichzeitig auch zum Antrieb des Transportvehikels, verwendet werden. Insbesondere auf einem Flüssiggastanker ist Erdgas der Brennstoff der Wahl, um die Emission von Luftschadstoffen auf ein relativ geringes Mass zu beschränken. Die Einstellbarkeit der Menge, die an den Gaseinspritzmotor respektive in das PRS geleitet wird, erlaubt es, auf den klimatischen und meteorologischen Bedingung wie auch dem Brennstoffbedarf des Hochdruckgaseinspritzmotors flexibel Rechnung zu tragen.

Ein Aspekt der Erfindung bezieht sich auf eine Vorrichtung wie vorstehend beschrieben, wobei der Gas-Flüssigkeitsabscheider einen Drucksensor aufweist, um den Druck im Gas-Flüssigkeitsabscheider zu messen, und eine Steuerung, um in Abhängigkeit des gemessenen Drucks ein Ventil, angeordnet zwischen einem Gasauslass des Gas-Flüssigkeitsabscheiders und der Überbrückungsleitung, anzusteuern. Die Vorrichtung wie vorstehend beschrieben kann so beschaffen sein, dass der Gas-Flüssigkeitsabscheider einen Füllstandsensor aufweist und eine Steuerung, um in Abhängigkeit des gemessenen Füllstands ein Ventil, angeordnet zwischen einem Flüssigkeitsauslass des Gas-Flüssigkeitsabscheiders und dem LNG-Tank anzusteuern. Durch eine entsprechende Regelung kann über die Ventile der Druck und das Flüssigkeitsniveau im Gas-Flüssigkeitsabscheider geregelt werden.

Die Erfindung bezieht sich weiter auf die Verwendung einer Vorrichtung wie vorstehend beschrieben auf einem Schiff, insbesondere einem Schiff, das mittels eines Hochdruck-Gaseinspritzmotors angetrieben wird. Angesichts der knappen Platzverhältnisse auf dem Schiff ist es besonders hilfreich, wenn die Kompressionsstufen des mehrstufigen Verdichters dank der erhöhten Effizienz und dem kontinuierlichen Entzug des N₂-Anteils aus dem LNG kleiner dimensioniert werden können.

Die Erfindung wir anhand von Figuren weiter verständlich gemacht. Die Figuren dienen der Illustration und sind nicht einschränkend zu verstehen.

Es zeigen:
- Figur 1: Schematische Darstellung einer Vorrichtung gemäss der vorliegenden Erfindung;
- Figur 2: Schematisches Mollier-Diagramm zur Verdeutlichung eines Verfahrens gemäss der vorliegenden Erfindung.

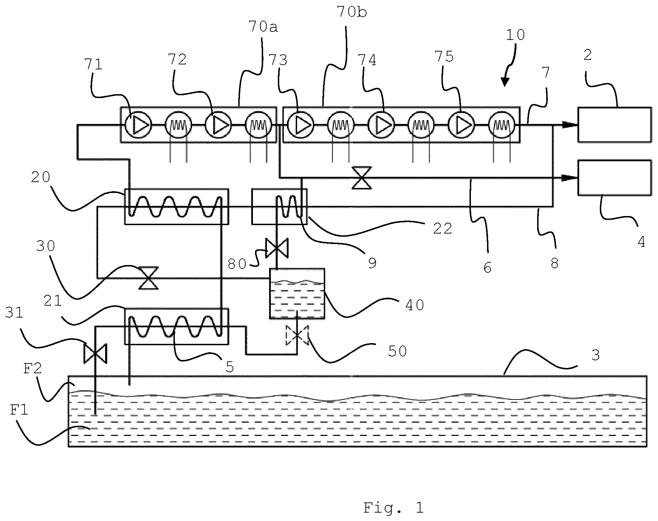

Figur 1 ist eine schematische Darstellung einer Vorrichtung zum Wiederverflüssigen und Rückführen von Abdampfgas (BOG) in einen Liquefied Natural Gas (LNG)-Tank. Das BOG F2 wird bei ca. -161°C aus dem LNG-Tank 3 entnommen und zunächst dem zweiten Wärmetauscher 21 zugeführt, wo es als Kühlfluid durch Leitung 5 geführt wird im Gegenstrom zu zu kühlendem, rückverflüssigtem Gas. Weiter flussabwärts wird das BOG einem ersten Wärmetauscher 20 zugeführt, namentlich einer Leitung zum Durchführen von Kühlfluid, im Gegenstrom zu zu kühlendem, komprimiertem Gas. Das so auf Temperaturen von ca. 30°C erwärmte BOG wird sodann einem mehrstufigen Verdichter 10 zugeleitet und in einer ersten Kompressionsstufe 70a verdichtet. Bevorzugt weist die erste Kompressionsstufe einen oder zwei, parallel oder in Serie geschaltete, Kolbenkompressoren 71,72 mit je nachfolgender Wasserkühlung auf. Die erste Kompressionsstufe 70a ist eingerichtet, das BOG auf einen ersten Druck p₁ von beispielsweise 12 bara zu verdichten. Nach der ersten Kompressionsstufe 70a ist Fluid leitend stromabwärts eine Abzweigleitung 6 angeordnet, die weiter stromabwärts in eine Versorgungsleitung für einen Niederdruck-Gaseinspritzmotor 4 mündet. Das Gas kann durch ein an der Abzweigeleitung 6 angeordnetes Ventil auf den vom Gaseinspritzmotor 4 verlangten Druck, beispielsweise 6 bara, entspannt werden. In der Figur ist gezeigt, dass die mehrstufige Verdichteranordnung 10 eine zweite Kompressionsstufe aufweist, die auch gleichzeitig die letzte Kompressionsstufe 70b ist. Die letzte Kompressionsstufe 70b ist eingerichtet, vorverdichtetes BOG auf einen zweiten Druck p₂ von ca. 300 bara zu verdichten. Dies erfolgt mittels dreier Kolbenkompressoren 73,74,75 mit jeweils anschliessender Wasserkühlung. Es kann aber auch eine andere Anzahl oder Art von Kompressoren verwendet werden und sie können parallel oder in Serie geschaltet sein.

Es ist flussabwärts der mehrstufigen Verdichteranordnung 10 Fluid führend einerseits ein Auslass 7 angeordnet, der in eine Versorgungsleitung für einen Hochdruck-Gaseinspritzmotor 2 mündet. Andererseits ist eine Rückführleitung 8 angeordnet, deren Inhalt weiter flussabwärts - unter anderem - mithilfe des ersten Wärmetauschers 20 indirekt gekühlt wird auf eine Temperatur von beispielsweise ca. -70°C. Dadurch kann das verdichtete Gas, soweit die Menge den Brennstoffbedarf des Hochdruck-Gaseinspritzmotors 2 übersteigt, der Rückführleitung 8 zugeführt werden. Fluidführend weiter stromabwärts des ersten Wärmetauschers 20 schliesst eine erste Expansionseinheit 30 an, die eingerichtet ist, das komprimierte und gekühlte Gas vom Druck p₂ auf einen dritten Druck p₃ von ca. 15 bara isenthalpisch auszudehnen, wodurch sich die Temperatur weiter absenkt auf ca. -110°C.

Fluidführend flussabwärts an die Expansionseinheit 30 schliesst ein Gas-Flüssigkeits-Abscheider 40 an, der eingerichtet ist, um bei Druck p₃ einen verflüssigten Gasanteil für die Rückspeisung in den LNG-Tank 3 abzuscheiden und einen gasförmigen Anteil in eine Überbrückungsleitung 9 zu führen, wobei die Überbrückungsleitung 9 in die Abzweigleitung 6 mündet. Aus Figur 1 ist ersichtlich, dass die beispielhafte Vorrichtung einen dritten Wärmetauscher 22 umfasst, dessen kühlende Leitung Teil der Überbrückungsleitung 9 ist und dessen zu kühlende Leitung Teil der Rückführleitung 8 ist, wobei letzterer Teil einem Abschnitt der Rückführleitung flussaufwärts des ersten Wärmetauschers 20 entspricht. Aufgrund der gezeigten Ausführungsform wird das hochkomprimierte, wassergekühlte BOG aus der letzten Kompressionsstufe 70b zunächst im indirekten Wärmetausch mit der gasförmigen Phase aus dem Gas-Flüssigkeits-Abscheider vorgekühlt und danach im indirekten Wärmetausch mit dem BOG aus dem LNG-Tank weitergekühlt, bevor die Expansion und Phasenabscheidung erfolgt.

Die flüssige Phase verlässt den Gas-Flüssigkeitsabscheider 40 und wird im zweiten Wärmetauscher 21 mithilfe von BOG, das unmittelbar aus dem LNG-Tank und in eine Kühlfluidleidung 5 geleitet wurde, indirekt weiter gekühlt auf eine Temperatur T₂ von nur mehr etwa -155°C. Schliesslich wird die Flüssigkeit in der Expansionseinheit 31 auf Atmosphärendruck entspannt und in den LNG Tank rückgeführt.

Die Ventile 80 und 31, respektive 50, dienen der Kontrolle von Druck und Flüssigkeitsniveau im Gas-Flüssigkeitsabscheider 40. Sie können in Abhängigkeit von einem im Gas-Flüssigkeitsabscheider gemessenen Druck und/oder Füllstand angesteuert werden. Optional kann auch ein Ventil zwischen dem Auslass des Gas-Flüssigkeitsabscheiders 40 und der Leitung des zweiten Wärmetauschers 21 zum Durchführend von zu kühlendem Fluid angeordnet sein um den Füllstand im Gas-Flüssigkeitsabscheider zu steuern.

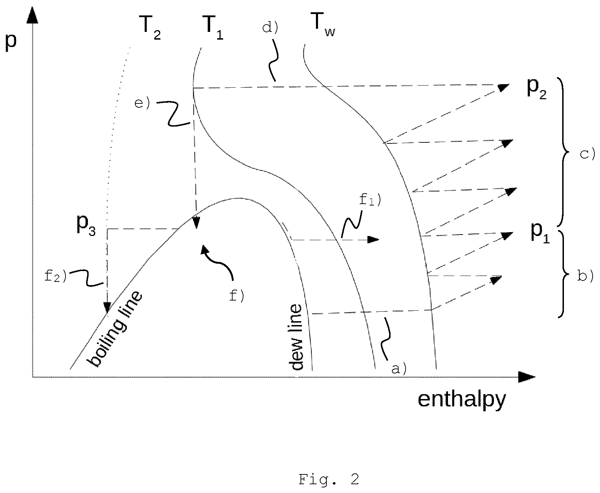

Figur 2 zeigt schematisches ein Mollier-Diagramm zur Verdeutlichung eines Verfahrens gemäss der vorliegenden Erfindung. Die x-Achse zeigt die Enthalpie des Systems, die y-Achse den Druck des Gases. Bestimmte Temperaturen sind als isotherme Linien T_{w}, T₁ und - gepunktet - T₂ eingezeichnet; gleichermassen auch die Siedekurve (boiling line) und Taulinie (dewline). Strichliert sind die Prozessschritte eingezeichnet, welche jeweils mit einer Enthalpie-, Temperatur- und/oder Druckänderung einhergehen.

Im Schritt a) wird das BOG aus dem Kopfraum des LNG Tanks entnommen und durch Umgebungstemperatur aber auch die Verwendung als Kühlmittel in einem oder mehreren Wärmetauschern auf eine Temperatur T_{w} erwärmt. Im Schritt b wird das BOG in einer ersten Kompressionsstufe, hier aufweisend zwei Kompressionsvorgänge mit anschliessender Wasserkühlung, auf einen ersten Druck p1 zwischen 8 und 18 bara komprimiert und es wird ein erster Teil dieses Gases abgezweigt (nicht gezeigt). Im Schritt c) wird das Gas weiterverdichtet, und zwar in einer letzten Kompressionsstufe, hier bestehend aus drei Kompressionsvorgängen mit je anschliessender Wasserkühlung, auf einen hohen Druck p2. Es folgt in Schritt d) das Kühlen von wenigstens einem Teil des weiterverdichteten Gases aus Schritt c), zunächst mittels Wasserkühlung auf T_{w} und dann auf eine erste Temperatur T₁ zwischen -20°C und -100°C. In Schritt e) folgt die isenthalpische Expansion auf einen dritten Druck p₃ zwischen 8 und 20 bara. Es folgt Schritt f) mit der Auftrennung des Gases in eine flüssige und eine gasförmige Phase, um die gasförmige Phase mit dem abgezweigten ersten Teil des Gases aus Schritt b) zu kombinieren (Sub-Schritt f₁) und um die flüssige Phase in den LNG Tank 3 rückzuführen (Sub-Schritt f₂).

Aus der Figur 2 wird ersichtlich, dass in Sub-Schritt f₂) die flüssige Phase vor dem Rückführen bei Umgebungsdruck in den LNG-Tank nochmals weitergekühlt wird auf eine Temperatur T₂ die nur noch wenig über dem Siedepunkt von Erdgas liegt, was der Kühlung im zweiten Wärmetauscher 21 aus Figur 1 entspricht. In Sub-Schritt f₁) ist zudem ersichtlich, dass die gasförmige Phase vor der Vereinigung mit dem vorverdichteten BOG aus der ersten Kompressionsstufe b) weiter ausgedehnt und/oder nochmals erwärmt werden kann, beispielsweise in indirektem Wärmetausch mit zu kühlendem, komprimierten Gas, was der Verwendung als Kältemittel im Wärmetauscher 22 der Figur 1 entspricht.

## Patentansprüche

1. Verfahren zum Wiederverflüssigen und Rückführen von Abdampfgas (BOG) in einen Liquefied Natural Gas (LNG)-Tank, umfassend die Schritte:
a) Entnehmen von BOG (F2) aus dem Kopfraum eines LNG Tanks (3);
b) Verdichten des BOG in einer ersten Kompressionsstufe (70a) auf einen ersten Druck p₁ zwischen 8 und 18 bara und Abzweigen eines ersten Teils dieses Gases;
c) Weiterverdichten eines zweiten Teils des Gases aus Schritt b) in einer letzten Kompressionsstufe (70b) auf einen zweiten Druck p₂ ≥ 120 bara, bevorzugt 120 bis 400 bara, besonders bevorzugt 150 bis 300 bara;
d) Kühlen von wenigstens einem Teil des weiterverdichteten Gases aus Schritt c) auf eine erste Temperatur T₁ zwischen -20°C und -100°C;
e) Ausdehnen des Gases aus Schritt d) auf einen dritten Druck p3 zwischen 8 und 20 bara;
f) Auftrennen des Gases aus Schritt e) in eine flüssige Phase und eine gasförmige Phase um
f₁) die gasförmige Phase mit dem abgezweigten ersten Teil des Gases aus Schritt b) zu kombinieren; und
f₂) die flüssige Phase in den LNG Tank (3) rückzuführen, **dadurch gekennzeichnet, dass** die flüssige Phase vor dem Rückführen in den LNG Tank (3) durch Wärmeaustausch mit kühlendem BOG (F2) aus dem Kopfraum des LNG Tanks (3) auf eine Temperatur T₂ zwischen -140 und -161°C gekühlt wird.

2. Verfahren nach Anspruch 1, wobei das Kühlen in Schritt d) zumindest teilweise durch Wärmeaustausch mit kühlendem BOG (F2) aus dem Kopfraum des LNG Tanks (3) erfolgt.

3. Verfahren nach einem der vorhergehenden Ansprüche, wobei das Kühlen in Schritt d) zumindest teilweise durch Wärmeaustausch mit der gasförmigen Phase aus Schritt f) erfolgt.

4. Verfahren nach einem der vorhergehenden Ansprüche, wobei in Schritt d) ein Teil des weiterverdichteten Gases aus Schritt c) einer Versorgungsleitung für einen Hochdruck-Gaseinspritzmotor (2) zugeführt wird.

5. Verfahren nach einem der vorhergehenden Ansprüche, wobei in Schritt f) der Druck p₃ überwacht und geregelt wird, sodass er einen Wert innerhalb eines vorbestimmten Bereichs aufweist.

6. Verfahren nach einem der vorhergehenden Ansprüche, wobei in Schritt f) ein Volumen der flüssigen Phase überwacht wird, um die Rückführmenge in den LNG-Tank in Abhängigkeit des Werts zu regeln.

7. Vorrichtung zum Wiederverflüssigen und Rückführen von Abdampfgas (BOG) in einen Liquefied Natural Gas (LNG)-Tank umfassend
- einen ersten Wärmetauscher (20), aufweisend eine Leitung zum Durchführen von Kühlfluid, bevorzugt BOG aus einem LNG-Tank (3), und eine Leitung zum Durchführen von auf eine erste Temperatur T₁ zwischen -20°C und -100°C zu kühlendem komprimiertem Gas, bevorzugt im Gegenstrom;
- einen mehrstufigen Verdichter (10), der wenigstens eine erste Kompressionsstufe (70a) und eine letzte Kompressionsstufe (70b) aufweist, wobei die erste Kompressionsstufe (70a) eingerichtet ist, BOG (F2) aus dem LNG-Tank (3) auf einen ersten Druck p₁ zwischen 8 und 18 bara zu verdichten, und wobei die letzte Kompressionsstufe (70b) eingerichtet ist, vorverdichtetes BOG auf einen zweiten Druck p₂ ≥ 120 bara, bevorzugt 120 bis 400 bara, besonders bevorzugt 150 bis 300 bara, zu verdichten;
- eine Abzweigleitung (6), welche Fluid leitend stromabwärts von der ersten Kompressionsstufe (70a) angeordnet ist und die weiter stromabwärts in eine Versorgungsleitung für einen Niederdruck-Gaseinspritzmotor (4) und/oder einer Gasverbrennungseinheit mündet;
- eine Rückführleitung (8), welche stromabwärts von der letzten Kompressionsstufe (70b) angeordnet ist;
- eine erste Expansionseinheit (30), die eingerichtet ist, komprimiertes Gas von einem zweiten Druck p₂ auf einen dritten Druck p₃ auszudehnen, wobei p₃ zwischen 8 und 20 bara, bevorzugt zwischen 10 und 18 bara beträgt;
- einen Gas-Flüssigkeits-Abscheider (40) der eingerichtet ist, um bei einem Druck p₃ einen verflüssigten Gasanteil für die Rückspeisung in den LNG-Tank (3) abzuscheiden und einen gasförmigen Anteil in eine Überbrückungsleitung (9) zu führen, wobei die Überbrückungsleitung (9) in die Abzweigleitung (6) mündet;
wobei der mehrstufige Verdichter (10) stromaufwärts Fluid führend mit dem Kopfraum des LNG Tanks (3) verbunden ist, bevorzugt über die Leitung des Wärmetauschers (20) zum Durchführen von kühlendem BOG, und wobei der mehrstufige Verdichter stromabwärts Fluid führend über die Rückführleitung (8) mit der Leitung des ersten Wärmetauschers (20) zum Durchführen von zu kühlendem komprimiertem Gas verbunden ist, weiter stromabwärts mit der ersten Expansionseinheit (30) verbunden ist, und noch weiter stromabwärts mit dem Gas-Flüssigkeits-Abscheider (40) verbunden ist,
**dadurch gekennzeichnet, dass**
die Vorrichtung weiterhin einen zweiten Wärmetauscher (21) umfasst, aufweisend eine Leitung (5) zum Durchführen von BOG aus einem LNG-Tank (3), und eine Leitung zum Durchführen von zu kühlendem, komprimiertem Gas, bevorzugt im Gegenstrom, wobei beim zweiten Wärmetauscher (21) die Leitung zum Durchführen von zu kühlendem komprimiertem Gas Fluid führend zwischen dem Flüssigkeitsauslass des Gas-Flüssigkeitsabscheiders (40) und dem LNG-Tank (3) angeordnet ist.

8. Vorrichtung nach Anspruch 7, **dadurch gekennzeichnet, dass**
die Leitung (5) zum Durchführen von BOG Fluid führend zwischen dem Kopfraum des LNG-Tanks (3) und der Leitung des ersten Wärmetauschers (20) zum Durchführen von Kühlfluid angeordnet ist.

9. Vorrichtung nach einem der Ansprüche 7 oder 8, weiter umfassend
- einen dritten Wärmetauscher (22), dessen kühlende Leitung Teil der Überbrückungsleitung (9) ist und dessen zu kühlende Leitung Teil der Rückführleitung (8) ist.

10. Vorrichtung nach einem der Ansprüche 7 bis 9, weiter umfassend
- eine zweite Expansionseinheit (31), die eingerichtet ist, komprimiertes Gas von einem dritten Druck p₃ auf Atmosphärendruck auszudehnen,
wobei die zweite Expansionseinheit (31) Fluid führend zwischen dem Flüssigkeitsauslass des Gas-Flüssigkeitsabscheiders (40) und dem LNG-Tank (3), bevorzugt zwischen der Leitung (5) des zweiten Wärmetauschers (21) zum Durchführen von zu kühlendem komprimiertem Gas und dem LNG-Tank (3) angeordnet ist.

11. Vorrichtung nach einem der Ansprüche 7 bis 10, wobei die Vorrichtung Teil eines Brenngasversorgungssystems zum Versorgen eines Hochdruck-Gaseinspritzmotors (2) mit im LNG-Tank (3) gespeichertem Gas ist, zusätzlich umfassend
- einen Auslass (7), der Fluid leitend stromabwärts von der zweiten Kompressionsstufe (70a) des mehrstufigen Verdichters (10) angeordnet ist und weiter stromabwärts in eine Versorgungsleitung für einen Hochdruck-Gaseinspritzmotor (2) mündet,
wobei das verdichtete Gas, soweit die Menge den Brennstoffbedarf des Hochdruck-Gaseinspritzmotors (2) übersteigt, der Rückführleitung (8) zuführbar ist.

12. Vorrichtung nach einem der Ansprüche 7 bis 11, wobei der Gas-Flüssigkeitsabscheider (40) einen Drucksensor aufweist, um den Druck im Gas-Flüssigkeitsabscheider zu messen, und eine Steuerung, um in Abhängigkeit des gemessenen Drucks ein Ventil (80), angeordnet zwischen einem Gasauslass des Gas-Flüssigkeitsabscheiders (40) und der Überbrückungsleitung (9), anzusteuern.

13. Vorrichtung nach einem der Ansprüche 7 bis 12, wobei der Gas-Flüssigkeitsabscheider (40) einen Füllstandsensor aufweist und eine Steuerung, um in Abhängigkeit des gemessenen Füllstands ein Ventil (80), angeordnet zwischen einem Flüssigkeitsauslass des Gas-Flüssigkeitsabscheiders (40) und dem LNG-Tank (3) anzusteuern.

14. Verwendung einer Vorrichtung nach einem der Ansprüche 7 bis 13 auf einem Schiff, insbesondere einem Schiff, das mittels eines Hochdruck-Gaseinspritzmotors (2) angetrieben wird.

## Claims

1. A method for reliquefying and returning boil-off gas (BOG) to a liquefied natural gas (LNG) tank, comprising the steps of:
a) Withdrawing BOG (F2) from the headspace of an LNG tank (3);
b) Compressing the BOG in a first compression stage (70a) to a first pressure p₁ between 8 and 18 bara and tapping of a first portion of this gas;
c) Further compressing a second portion of the gas from step b) in a final compression stage (70b) to a second pressure p₂ ≥ 120 bara, preferably 120 to 400 bara, particularly preferably 150 to 300 bara;
d) Cooling at least part of the further compressed gas from step c) to a first temperature T₁ between -20 °C and -100 °C;
e) Expanding the gas from step d) to a third pressure p₃ between 8 and 20 bara;
f) Separating the gas from step e) into a liquid phase and a gaseous phase to
f₁) combine the gaseous phase with the tapped first portion of the gas from step b); and
f₂) return the liquid phase to the LNG tank (3),
**characterized in that** the liquid phase before being returned to the LNG tank (3) is cooled to a temperature T₂ between -140 and -161 °C by heat exchange with cooling BOG (F2) from the headspace of the LNG tank (3).

2. Method according to claim 1, wherein the cooling in step d) is carried out at least partly by heat exchange with cooling BOG (F2) from the headspace of the LNG tank (3).

3. Method according to any one of the preceding claims, wherein the cooling in step d) is carried out at least partly by heat exchange with the gaseous phase from step f).

4. Method according to one of the preceding claims, wherein in step d) a portion of the further compressed gas from step c) is fed to a supply line for a high-pressure gas injection engine (2).

5. Method according to one of the preceding claims, wherein in step f) the pressure p₃ is monitored and controlled so that it has a value within a predetermined range.

6. Method according to one of the preceding claims, wherein in step f) a volume of the liquid phase is monitored in order to regulate the return quantity into the LNG tank as a function of the value.

7. An apparatus for reliquefying and returning boil-off gas (BOG) into a liquefied natural gas (LNG) tank comprising
- a first heat exchanger (20) comprising a line for passing through cooling fluid, preferably BOG from an LNG tank (3), and a line for passing through compressed gas to be cooled to a first temperature T₁ between -20°C and -100 °C, preferably in counterflow;
- a multi-stage compressor (10) comprising at least a first compression stage (70a) and a final compression stage (70b), the first compression stage (70a) being configured to compress BOG (F2) from the LNG tank (3) to a first pressure p₁ between 8 and 18 bara and wherein the final compression stage (70b) is configured to compress precompressed BOG to a second pressure p₂ ≥ 120 bara, preferably 120 to 400 bara, particularly preferably 150 to 300 bara;
- a branch line (6) which is arranged downstream of the first compression stage (70a) in a fluid-conducting manner and which opens further downstream into a supply line for a low-pressure gas injection engine (4) and/or a gas combustion unit;
- a return line (8) which is arranged downstream of the final compression stage (70b);
- a first expansion unit (30) configured to expand compressed gas from a second pressure p₂ to a third pressure p₃, wherein p₃ is between 8 and 20 bara, preferably between 10 and 18 bara;
- a gas-liquid separator (40) configured to separate a liquefied gas portion for feeding back into the LNG tank (3) at a pressure p₃ and to feed a gaseous portion into a bypass line (9), the bypass line (9) opening into the branch line (6);
wherein the multi-stage compressor (10) is connected upstream in a fluid-carrying manner to the headspace of the LNG tank (3), preferably via the line of the heat exchanger (20) for passing through cooling BOG, and wherein the multi-stage compressor is connected downstream in a fluid-carrying manner via the return line (8) to the line of the first heat exchanger (20) for passing through compressed gas to be cooled, is connected further downstream to the first expansion unit (30), and is connected still further downstream to the gas-liquid separator (40),
**characterized in that**
the apparatus further comprising a second heat exchanger (21), having a line (5) for passing through BOG from an LNG tank (3), and a line for passing through compressed gas to be cooled, preferably in counterflow,
wherein in the second heat exchanger (21) the line for passing through compressed gas to be cooled is arranged in a fluid-conducting manner between the liquid outlet of the gas-liquid separator (40) and the LNG tank (3).

8. Apparatus according to claim 7, **characterized in that** the line (5) for passing through BOG fluid is arranged in a fluid-conducting manner between the headspace of the LNG tank (3) and the line of the first heat exchanger (20) for passing through cooling fluid.

9. Apparatus according to one of claims 7 or 8, further comprising
- a third heat exchanger (22), the cooling line of which is part of the bypass line (9) and the line to be cooled of which is part of the return line (8).

10. Apparatus according to any one of claims 7 to 9, further comprising
- a second expansion unit (31) configured to expand compressed gas from a third pressure p₃ to atmospheric pressure,
wherein the second expansion unit (31) is configured to conduct fluid between the liquid outlet of the gas-liquid separator (40) and the LNG tank (3), preferably between the line (5) of the second heat exchanger (21) for passing through compressed gas to be cooled and the LNG tank (3).

11. Apparatus according to any one of claims 7 to 10, wherein the apparatus is part of a fuel gas supply system for supplying a high-pressure gas injection engine (2) with gas stored in the LNG tank (3), additionally comprising
- an outlet (7) which is arranged downstream of the second compression stage (70a) of the multi-stage compressor (10) in a fluid-conducting manner and opens further downstream into a supply line for a high-pressure gas injection engine (2),
wherein the compressed gas, insofar as the quantity exceeds the fuel requirement of the high-pressure gas injection engine (2), can be fed to the return line (8).

12. Apparatus according to any one of claims 7 to 11, wherein the gas-liquid separator (40) comprises a pressure sensor to measure the pressure in the gas-liquid separator, and a controller to actuate a valve (80) arranged between a gas outlet of the gas-liquid separator (40) and the bypass line (9) as a function of the measured pressure.

13. Apparatus according to any one of claims 7 to 12, wherein the gas-liquid separator (40) comprises a level sensor and a controller to actuate a valve (80) arranged between a liquid outlet of the gas-liquid separator (40) and the LNG tank (3) as a function of the measured level.

14. Use of an apparatus according to any one of claims 7 to 13 on a vessel, in particular a vessel propelled by means of a high-pressure gas injection engine (2).

## Revendications

1. Procédé pour la reliquéfaction et le renvoie de gaz d'évaporation (BOG) dans un réservoir de gaz naturel liquéfié (GNL), comprenant les étapes suivantes :
a) Retrait du BOG (F2) de l'espace de tête d'un réservoir de GNL (3) ;
b) Comprimer le BOG dans un premier étage de compression (70a) à une première pression p₁ comprise entre 8 et 18 bara et prélever une première partie de ce gaz ;
c) Comprimer davantage une deuxième partie du gaz provenant de l'étage b) dans un étage final de compression (70b) à une seconde pression p₂ ≥ 120 bara, de préférence 120 à 400 bara, de manière particulièrement préférée 150 à 300 bara ;
d) Refroidissement d'au moins une partie du gaz comprimé de l'étage c) à une première température T₁ comprise entre -20 °C et -100 °C ;
e) Dilater le gaz issu de l'étage d) à une troisième pression p₃ comprise entre 8 et 20 bara ;
f) Séparation du gaz de l'étage e) en une phase liquide et une phase gazeuse pour
f₁) combiner la phase gazeuse avec la première partie prélevée du gaz de l'étage b) ; et
f₂) renvoyer la phase liquide vers le réservoir de GNL (3), **caractérisé en ce que** la phase liquide, avant d'être renvoyée vers le réservoir de GNL (3), est refroidie à une température T₂ comprise entre - 140 et -161 °C par échange thermique avec le BOG de refroidissement (F2) provenant de l'espace de tête du réservoir de GNL (3).

2. Procédé selon la revendication 1, dans lequel le refroidissement à l'étage d) est effectué au moins en partie par échange thermique avec le BOG de refroidissement (F2) provenant de l'espace de tête du réservoir de GNL (3).

3. Procédé selon l'une quelconque des revendications précédentes, dans lequel le refroidissement à l'étage d) est effectué au moins en partie par échange thermique avec la phase gazeuse provenant de l'étage f).

4. Procédé selon l'une des revendications précédentes, dans lequel, à l'étage d), une partie du gaz encore comprimé provenant de l'étage c) est acheminée vers une conduite d'alimentation pour un moteur à injection de gaz haute pression (2).

5. Procédé selon l'une des revendications précédentes, dans lequel, à l'étage f), la pression p₃ est surveillée et contrôlée de manière à avoir une valeur comprise dans une plage prédéterminée.

6. Procédé selon l'une des revendications précédentes, dans lequel, à l'étage f), un volume de la phase liquide est surveillé afin de réguler la quantité de retour dans le réservoir de GNL en fonction de la valeur.

7. Appareil pour la reliquéfaction et le renvoie de gaz d'évaporation (BOG) dans un réservoir de gaz naturel liquéfié (GNL) comprenant
- un premier échangeur de chaleur (20) comprenant une conduite pour le passage d'un fluide de refroidissement, de préférence du BOG provenant d'un réservoir de GNL (3), et une conduite pour le passage d'un gaz comprimé à refroidir jusqu'à une première température T₁ comprise entre - 20 °C et -100 °C, de préférence en contre-courant;
- un compresseur multi-étage (10) comprenant au moins un premier étage de compression (70a) et une étage finale de compression (70b), le premier étage de compression (70a) étant configuré pour comprimer le BOG (F2) provenant du réservoir de GNL (3) jusqu'à une première pression p₁ comprise entre 8 et 18 bara, et l'étage finale de compression (70b) étant configuré pour comprimer le BOG pré-comprimé jusqu'à une seconde pression p₂ ≥ 120 bara, de préférence comprise entre 120 et 400 bara, et particulièrement de préférence comprise entre 150 et 300 bara;
- une conduite de dérivation (6) disposée en aval du premier étage de compression (70a) en communication fluidique, et débouchant plus en aval dans une conduite d'alimentation d'un moteur à injection de gaz basse pression (4) et/ou d'une unité de combustion de gaz;
- une conduite de retour (8) disposée en aval de l'étage final de compression (70b);
- une première unité de dilatation (30) configurée pour dilater un gaz comprimé depuis la seconde pression p₂ jusqu'à une troisième pression p₃, p₃ étant comprise entre 8 et 20 bara, de préférence entre 10 et 18 bara ; une conduite de retour (8) qui est disposée en aval de l'étage finale de compression (70b);
- un séparateur gaz-liquide (40) configuré pour séparer une partie du gaz liquéfié pour la réinjecter dans le réservoir de GNL (3) à la pression p₃, et pour injecter une partie gazeuse dans une conduite de contournement (9), la conduite de contournement (9) débouchant dans la conduite de dérivation (6) ;
dans lequel le compresseur multi-étage (10) est raccordé en amont, en communication fluidique, à l'espace de tête du réservoir de GNL (3), de préférence via la conduite du premier échangeur de chaleur (20) destinée au passage du BOG de refroidissement, et dans lequel le compresseur multi-étage est raccordé en aval, en communication fluidique, via la conduite de retour (8), à la conduite du premier échangeur de chaleur (20) destinée au passage du gaz comprimé à refroidir, puis encore plus en aval à la première unité de dilatation (30), et encore plus en aval au séparateur gaz-liquide (40), **caractérisé en ce que** l'appareil comprend en outre un second échangeur de chaleur (21), comportant une conduite (5) pour le passage du BOG provenant d'un réservoir de GNL (3), et une conduite pour le passage d'un gaz comprimé à refroidir, de préférence en contre-courant,
dans lequel, dans le second échangeur de chaleur (21), la conduite pour le passage du gaz comprimé à refroidir est agencée en communication fluidique entre la sortie liquide du séparateur gaz-liquide (40) et le réservoir de GNL (3).

8. Appareil selon la revendication 7, **caractérisé en ce que** la conduite (5) pour le passage du BOG est disposée en communication fluidique entre l'espace libre du réservoir de GNL (3) et la conduite du premier échangeur de chaleur (20) destinée au passage du fluide de refroidissement.

9. Appareil selon l'une des revendications 7 ou 8, comprenant en outre
- un troisième échangeur de chaleur (22), dont la conduite de refroidissement fait partie de la conduite de contournement (9) et dont la conduite à refroidir fait partie de la conduite de retour (8).

10. Appareil selon l'une quelconque des revendications 7 à 9, comprenant en outre
- une seconde unité de dilatation (31) configurée pour dilater un gaz comprimé depuis la troisième pression p₃ jusqu'à la pression atmosphérique,
dans lequel la seconde unité de détente (31) est configurée pour assurer l'écoulement de fluide entre la sortie liquide du séparateur gaz-liquide (40) et le réservoir de GNL (3), de préférence entre la conduite (5) du second échangeur de chaleur (21) destinée au passage du gaz comprimé à refroidir et le réservoir de GNL (3).

11. Appareil selon l'une quelconque des revendications 7 à 10, dans lequel l'appareil fait partie d'un système d'alimentation en gaz combustible destiné à alimenter un moteur à injection de gaz haute pression (2) avec du gaz stocké dans le réservoir de GNL (3), comprenant en outre
- une sortie (7) disposé en aval du deuxième étage de compression (70a) du compresseur multi-étage (10) de manière à conduire le fluide, et débouchant plus en aval dans une conduite d'alimentation d'un moteur à injection de gaz haute pression (2),
dans lequel le gaz comprimé, dans la mesure où sa quantité excède le besoin en carburant du moteur à injection de gaz haute pression (2), peut être acheminé vers la conduite de retour (8)

12. Dispositif selon l'une quelconque des revendications 7 à 11, dans lequel le séparateur gaz-liquide (40) comprend un capteur de pression pour mesurer la pression dans le séparateur gaz-liquide et un contrôleur pour actionner une vanne (80) disposée entre une sortie gaz du séparateur gaz-liquide (40) et la conduite de contournement (9) en fonction de la pression mesurée.

13. Appareil selon l'une quelconque des revendications 7 à 12, dans lequel le séparateur gaz-liquide (40) comprend un capteur de niveau et un contrôleur pour actionner une vanne (80) disposée entre une sortie liquide du séparateur gaz-liquide (40) et le réservoir de GNL (3) en fonction du niveau mesuré.

14. Utilisation d'un dispositif selon l'une quelconque des revendications 7 à 13 sur un navire, en particulier un navire propulsé au moyen d'un moteur à injection de gaz haute pression (2).
